# EUROPEAN PATENT SPECIFICATION

(11) **EP 1 382 259 B1**
(45) Date of publication and mention of the grant of the patent: **02.11.2005**
(21) Application number: 03252439.9
(22) Date of filing: 16.04.2003
(51) Int. Cl.: A21B 7/00

(54) **Bread maker and control method thereof**
Brotbackmaschine und Steuerverfahren dafür
Machine de fabrication de pain et son procédé de commande

(30) Priority: 19.07.2002 KR 2002042588
(43) Date of publication of application: 21.01.2004
(73) Proprietor: SAMSUNG ELECTRONICS CO., LTD., Suwon-city, Kyungki-do (KR)
(72) Inventor: Kwon, Yong-hyun, Suwon City, Kyungki-do (KR); Lim, Dong-bin, Suwon City, Kyungki-do (KR); Lee, Jang-woo, Suwon City, Kyungki-do (KR)
(74) Representative: Brandon, Paul Laurence

(56) References cited:
- US-A- 4 803 086
- US-A- 5 146 840
- US-A- 5 947 009

## Description

The present invention relates to bread makers and to methods of controlling bread makers.

Generally, making bread is so complicated that it is difficult for an average person to manually make satisfactory bread at home. That is, making the bread includes multiple steps of mixing ingredients such as flour, sugar, yeast, etc., to form a dough; kneading the dough, leavening the dough; baking the dough; and so on.

Therefore, various bread makers have been developed to allow a user to easily make bread. The bread maker automatically performs the foregoing multiple steps and provides finished bread to the user.

For example, a bread maker disclosed in Korean Patent Publication No. KR-A-1991-10203 includes a pair of parallel kneading drums at upper and lower parts of an oven compartment that reverse rotary direction periodically, a baking tray between the pair of kneading drums, a heater heating the inside of the oven compartment, a bar code scanner, etc.

In the bread maker, disclosed in Korean Patent Publication No. KR-A-1991-10203 or in US-A-5 146 840, upper and lower ends of a mixing bag filled with flour, water, etc., are attached to the upper and lower kneading drums, and then the mixing bag is reciprocated up and down for a predetermined period of time, thereby kneading the dough in the mixing bag.

After completing the kneading of the dough, the mixing bag is automatically separated from the upper kneading drum, and wound on the lower kneading drum, with the dough being squeezed out of the mixing bag and into the baking tray. Thereafter, a heater heats the inside of the oven compartment, thereby leavening and baking the dough for a predetermined period of time.

The bread is made according to a bar code that is printed on the mixing bag that includes information on kneading time, leavening time, baking time, etc., for a particular recipe. That is, the bar code is read by the bar code scanner and the read data is transmitted to a controller, so that the controller controls the kneading drums, the heater, etc., on the basis of the read data.

However, in the conventional bread maker, while the mixing bag is reciprocated up and down to knead the dough, if the upper and lower kneading drums do not rotate synchronously, or if the mixing bag separates from the upper or lower kneading drum because, for example, the mixing bag tears, the mixing bag is incorrectly attached to the upper and lower kneading drums, etc., internal components of the bread maker may be damaged.

It is an aim of preferred embodiments of the present invention to provide a bread maker and a control method thereof, that can prevent internal components of the bread maker from being damaged due to non-synchronous rotation between the upper and lower kneading drums, an incorrect installation of a mixing bag, etc.

This aim is accomplished by; a rotation sensing part sensing a rotation rate of one of the kneading drums; and a controller storing the rotation rate sensed by the rotation sensing part while the one of the kneading drums rotates during a first predetermined period of time, comparing the stored rotation rate with a rotation rate sensed by the rotation sensing part while the one of the kneading drums rotates during a next predetermined period of time, and stopping the drum driving part when a difference between the stored rotation rate and the sensed rotation rate for the next period of time exceeds an allowable limit.

Suitably, the rotation sensing part includes a disk part rotating with the one of the kneading drums, and having at least one projection radially extending from a circumference thereof; and a disk sensor emitting a light toward the disk part and outputting a pulse signal according to interruption of the light by rotation of the at least one projection of the disk part.

Suitably, the disk part includes a first disk having a single projection; and a second disk having a plurality of projections along a circumference thereof at regular intervals.

Suitably, the disk sensor comprises a light emitting part and a light receiving part facing each other with the disk part therebetween, the disk sensor outputting a pulse signal when the at least one projection of the disk part interrupts light emitted from the light emitting part to the light receiving part.

Suitably, the controller includes a memory storing the pulse signal output during the first period of time, and the controller compares a difference in pulse widths between the pulse signal stored in the memory and the pulse signal output from the pulse generator during the next period of time.

The method of controlling proper functioning is defined 6x

According to the present invention in a second aspect, there is provided a method of controlling a bread maker having an oven compartment and an electric component compartment, a pair of parallel kneading drums inside the oven compartment to which are attachable opposite ends of a mixing bag containing bread ingredients, the kneading drums reversing rotary direction periodically, and a drum driving part in the electric component compartment rotating the kneading drums clockwise and including sensing a rotation rate of one of the kneading drums for a first predetermined period of time; storing the sensed rotation rate; comparing the stored rotation rate with the rotation rate sensed while the one of the kneading drums rotates during a next period of time; and stopping the drum driving part when a difference between the stored rotation rate and the rotation rate sensed during the next period of time exceeds an allowable limit.

Suitably, the bread maker further includes a rotation sensing part including a disk part rotating with the one of the kneading drums and having a plurality of projections around a circumference thereof at regular intervals; and a disk sensor outputting a pulse signal according to interruption, by the projections of the disk part, of light emitted toward the disk part, wherein the sensed rotation rate that is stored is based upon the pulse width of the pulse signal output from the disk sensor while the one of the kneading drums rotates for the predetermined period of time.

Suitably, comparing the stored rotation rate and the sensed rotation rate of the next period of time includes comparing pulse widths of the pulse signals output during the first period of time and the next period of time, respectively.

Suitably, the method further includes providing a warning when a difference between the stored rotation rate and the sensed rotation rate of the next period of time exceeds an allowable limit.

These together with other aspects and advantages which will be subsequently apparent, reside in the details of construction and operation as more fully hereinafter described and claimed, reference being had to the accompanying drawings forming a part thereof, wherein like numerals refer to like parts throughout.

Further features of the present invention are set out in the appended claims.

The present invention will become apparent and more readily appreciated from the following description of the embodiments, by way of example only, taken in conjunction with the accompany drawings, of which:
Figure 1 is a perspective view of a bread maker according to an embodiment of the present invention;
Figure 2 is a perspective view of an electric component compartment of the bread maker shown in FIG. 1;
Figure 3 is an exploded perspective view of a portion of the electric component compartment of FIG. 2;
Figure 4 is a front view of a mixing bag used in the bread maker according to the embodiment of the present invention;
Figure 5 is a control block diagram of the bread maker according to the embodiment of the present invention;
Figures 6A and 6B illustrate pulse signals output from a rotation sensor according to the embodiment of the present invention; and
Figure 7 is a flowchart illustrating control of the bread maker according to the embodiment of the present invention.

Hereinafter, an embodiment of the present invention will be described in detail with reference to the attached drawings, wherein the like reference numerals refer to the like elements throughout. The present invention may, however, be embodied in many different forms and should not be construed as being limited to the embodiment set forth herein; rather, this embodiment is provided so that the present disclosure will be thorough and complete, and will fully convey the concept of the invention to those skilled in the art.

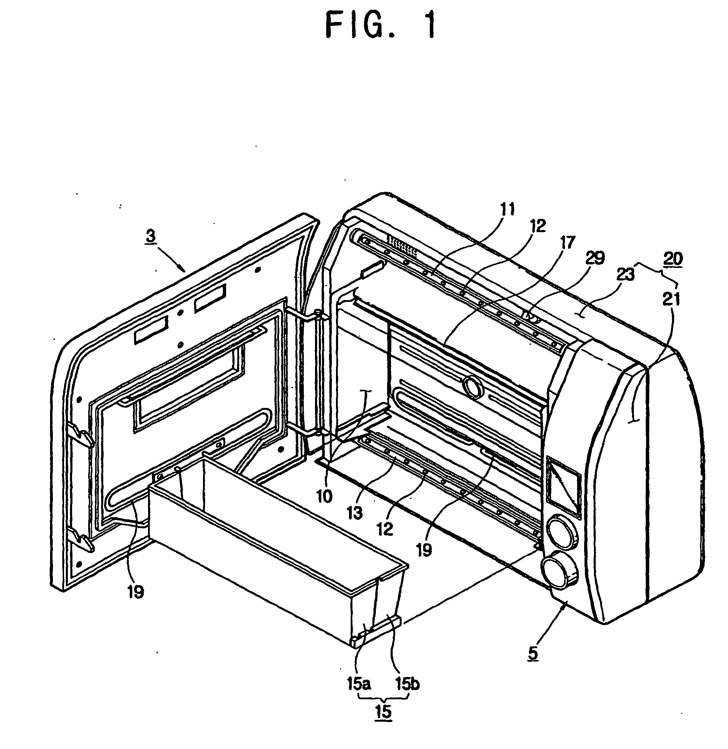

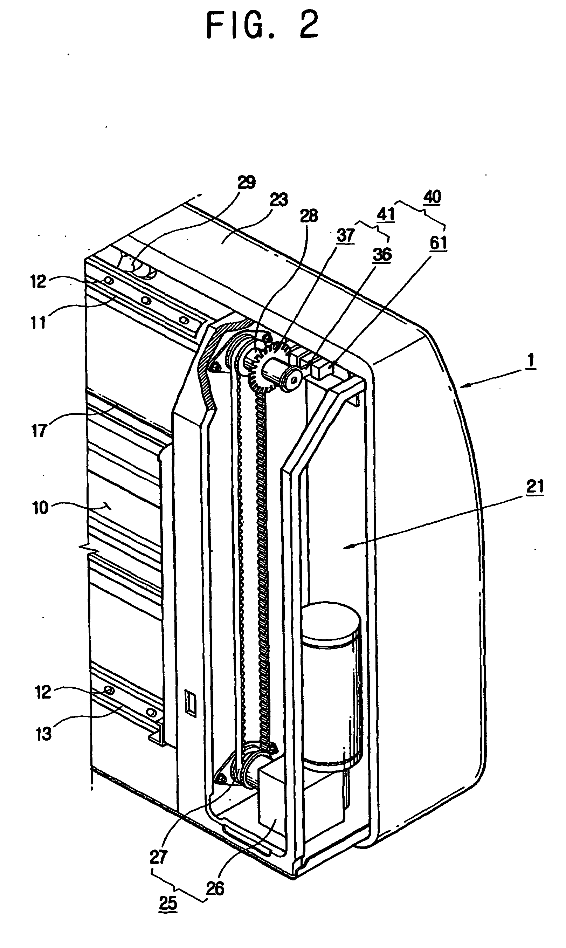

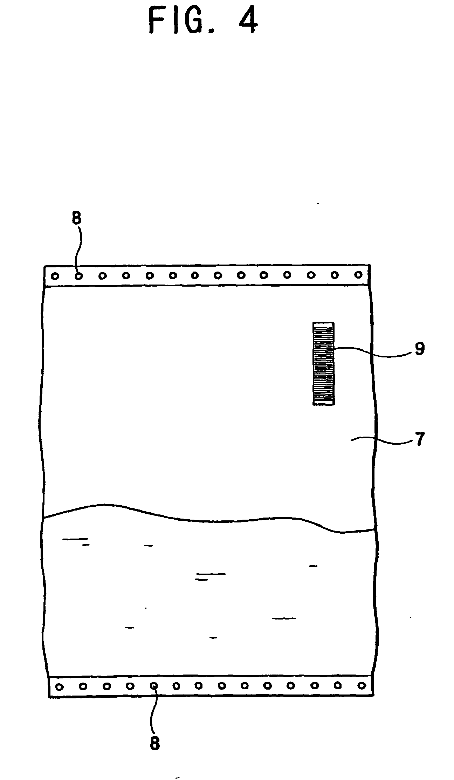

As shown in Figures 1 through 3, a bread maker according to an embodiment of the present invention includes a main body 1 divided into an oven compartment 10 and an electric component compartment 20, a door 3 in the front of the main body 1 to open and close the front opening of the oven compartment 10, and a control panel 5 in the front of the main body 1 to allow a user to control the bread maker and know the state of the bread maker. Inside the oven compartment 10, upper and lower kneading drums 11 and 13 are provided in parallel and reversibly rotate. Opposite ends 8 of a mixing bag 7 (refer to Figure 4) filled with raw materials (ingredients) for bread are attached to projections 12 on the upper and lower kneading drums 11 and 13, and the mixing bag 7 is wound.

In a lower part of the oven compartment 10, there is a baking tray 15 in which the dough is baked between the upper and lower kneading drums 11 and 13. In a lower part of the oven compartment 10, there is a baking tray 15 in which the dough is baked between the upper and lower kneading drums 11 and 13. The baking tray 15 includes first and second trays 15a and 15b, each having an "L"-shaped section symmetrical to one another that combine into a box shape having an open top. In an upper part of the oven compartment 10, a pair of squeezing members 17 is between the upper kneading drum 11 and the baking tray 15 that kneads the dough contained in the mixing bag 7 within the baking tray 15, preventing the dough from moving outside the baking tray 15.

At upper and lower parts of the inside walls of the oven compartment 10 and the door 3 are heaters 19 for heating the inside of the oven compartment 10.

The electric component compartment 20 includes a first component compartment 21 placed beside the oven compartment 10 and a second component compartment 23 placed behind the oven compartment 10. Inside the first component compartment 21 is a drum driving part 25 that rotates the upper and lower kneading drums 11 and 13 in clockwise and counterclockwise directions. Inside the second component compartment 23 is a bar code scanner 29 that reads a bar code 9 printed on or applied to the mixing bag 7 that is wound on the upper and lower kneading drums 11 and 13. The bar code scanner 29 may move close to, and distantly from, an outer circumference of the upper kneading drum 11.

The drum driving part 25 includes a motor 26 that rotates the lower kneading drum 13, and a belt 27 that transmits a rotary movement of the lower kneading drum 13 to a rotation shaft 28 of the upper kneading drum 11.

A rotation sensing part 40 senses rotation of at least one of the upper and lower kneading drums 11 and 13, and a controller 70 (described below) stops the drum driving part 25 when a pulse signal output by the rotation sensing part 40 is greater than a predetermined allowable pulse width.

The rotation sensing part 40 includes a disk part 41 attached to the rotation shaft 28 of the upper kneading drum 11, and a rotation sensor 61 placed near the disk part 41 that outputs a pulse signal by sensing the rotation of the disk part 41.

The disk part 41 includes a first disk 36 that allows the rotation sensor 61 to sense one turn of the upper kneading drum 11, and a second disk 37 that allows the rotation sensor 61 to sense a rotation of the upper kneading drum 11 that is less than one revolution.

The first disk 36 is a circular plate 43, which is separated from the second disk 37 by a cylindrical part 52 and connected to the rotation shaft 28 of the upper kneading drum 11 using a washer 54 and a bolt 56. The circular plate 43 is formed with a single projection 44 radially extended therefrom. Hence, the first disk 36 rotates with the upper kneading drum 11 and allows the rotation sensor 61 to sense one revolution of the upper kneading drum 11.

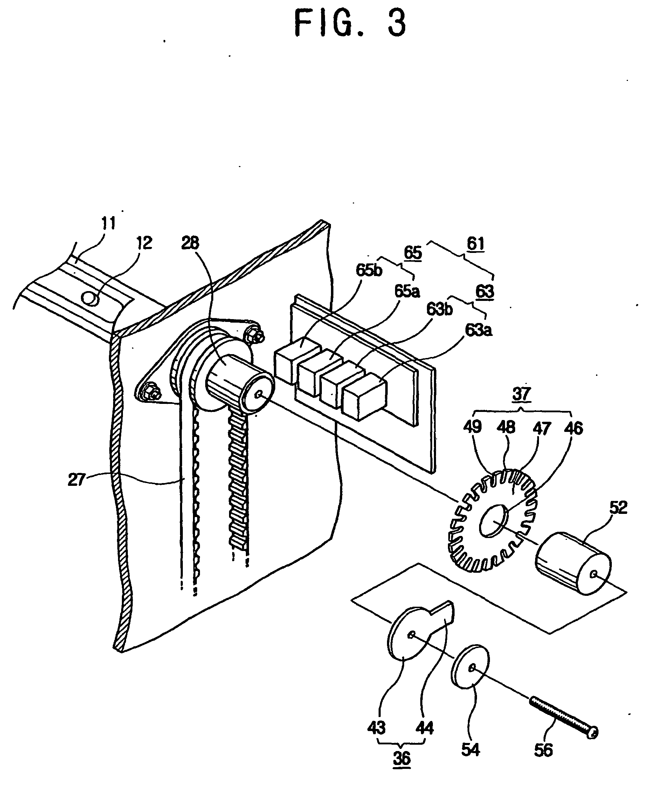

The second disk 37 is a circular plate 47 with a shaft combining hole 46 used to attach the circular plate 47 to the rotation shaft 28 of the upper kneading drum 11. The circular plate 47 has a plurality of slots 49 along the circumference thereof at regular intervals, forming a plurality of projections 48. For example, in the embodiment shown in FIG. 3, the second disk 37 has twenty-four slots 49, forming twenty-four projections 48. Hence, the second disk 37 rotates with the upper kneading drum 11 and allows the rotation sensor 61 to sense a rotation of the upper kneading drum 11 that is less than one complete turn.

The rotation sensor 61 includes a first disk sensor 63 sensing the single projection 44 of the first disk 36 and outputting one pulse signal per one revolution of the upper kneading drum 11, and a second disk sensor 65 sensing the twenty-four projections 48 of the second disk 37 and outputting twenty-four pulse signals per revolution of the upper kneading drum 11. That is, while the upper kneading drum 11 makes one revolution, the first and second disk sensors 63 and 65 output one and twenty-four pulse signals, respectively.

The first and second disk sensors 63 and 65 include light emitting parts 63a and 65a that emit a sensing signal such as infrared rays toward the first and second disks 36 and 37, and light receiving parts 63b and 65b that face the light emitting parts 63a and 65a, respectively, across the first and second disks 36 and 37 and receive the light emitted from the light emitting parts 63a and 65a, respectively.

The first disk sensor 63 senses when the single projection 44 of the first disk 36 interrupts the light emitted from the light emitting part 63a to the light receiving part 63b, thereby outputting one pulse signal per revolution of the upper kneading drum 11.

The second disk sensor 65 senses when the twenty-four projections 48 of the second disk 37 interrupt the light emitted from the light emitting part 65a to the light receiving part 65b, thereby outputting twenty-four pulse signals per one complete turn of the upper kneading drum 11.

The rotation sensor 61 transmits the pulse signals output from the first and second disk sensors 63 and 65 to the controller 70, and the controller 70 determines a rotation rate of the upper kneading drum 11 on the basis of the output pulse signals. Thus, the controller 70 controls the motor 26 of the drum driving part 25 to rotate the upper and lower kneading drums 11 and 13 according to the determined rotation rate thereof, thereby causing the mixing bag 7 to be properly reciprocated up and down.

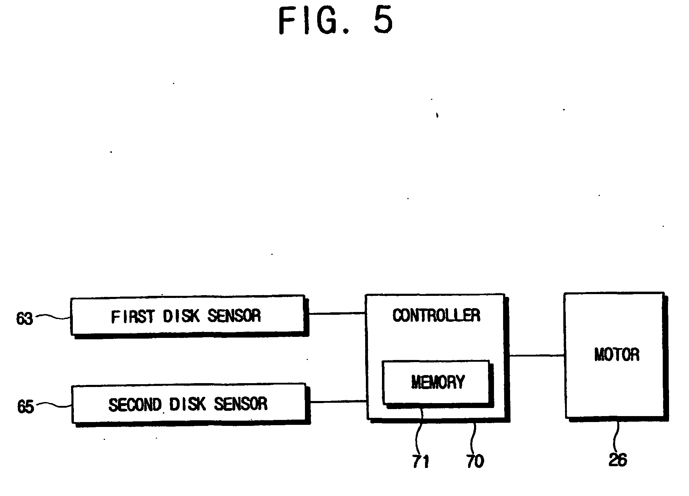

Thus, as shown in Figure 5, the bread maker according to this embodiment of the present invention includes the first and second disk sensors 63 and 65 sensing the rotation of the first and second disks 36 and 37, and the controller 70 determining whether the upper and lower kneading drums 11 and 13 are operating in a normal or abnormal state based upon the pulse signals output from the first and second disk sensors 63 and 65.

The controller 70 stores in a memory 71 the pulse widths of the pulse signals output from the first and second disk sensors 63 and 65 as the first and second disks 36 and 37 make one revolution. The controller 70 compares the pulse widths stored in the memory 71 with the pulse widths of the pulse signals output from the first and second disk sensors 63 and 65 as the first and second disks 36 and 37 make the next revolution. When there is a difference between the pulse widths stored in the memory 71 as the first and second disks 36 and 37 make one revolution and the pulse widths of the pulse signals output from the first and second disk sensors 63 and 65 as the first and second disks 36 and 37 make the next revolution, and the difference exceeds an allowable limit, the controller 70 determines that the upper and lower kneading drums 11 and 13 are operating in an abnormal state and stop the motor 26. Also, the control panel 5 in the front of the electric component compartment 20 warns a user of the abnormal state.

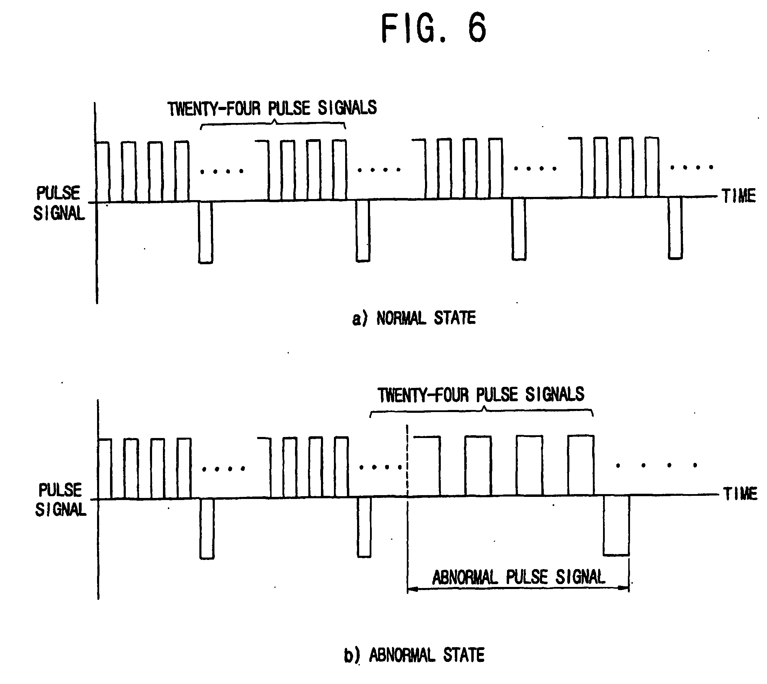

Figures 6A and 6B illustrate the pulse signals output from the first and second disk sensors 63 and 65. As shown therein, while the upper kneading drum 11 makes one complete turn, the first and second disk sensors 63 and 65 output one and twenty-four pulse signals, respectively.

In a normal state, the light receiving part 65b of the second disk sensor 65 outputs one pulse signal per 1 msec (millisecond). However, in an abnormal state, for example, where the mixing bag 7 separates from the lower kneading drum 13, the upper kneading drum 11 becomes overloaded and the motor 26 cannot rotate the upper kneading drum 11 as fast as the motor 26 rotates the upper kneading drum 11 in the normal state, so that the light receiving parts 63b and 65b output pulse signals per unit of time that are greater than 1 msec. In other words, in the abnormal state, the first and second disks 36 and 37 rotate slower than in the normal state, so that in the abnormal state a pulse width is larger than in the normal state. The pulse width indicates a load applied to the motor 26, so that the larger the pulse width, the higher the current that flows in the motor 26, which may damage the motor 26.

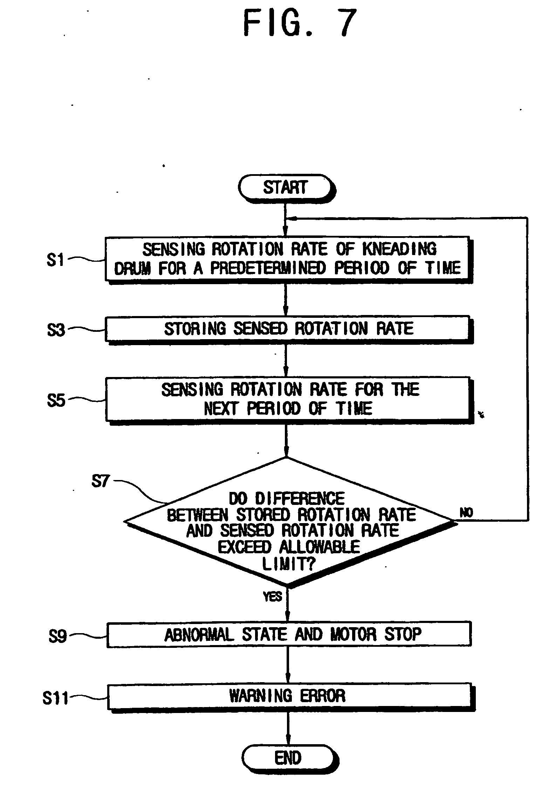

The bread maker according to this embodiment of the present invention is controlled as follows. Referring to FIG. 7, first, the pulse signal due to the second disk 37 is sensed while the upper kneading drum 11 makes one revolution (S1), and the memory 71 stores the rotation rate (pulse width) based upon the sensed pulse signal (S3). Thereafter, the pulse signal due to the second disk 37 is sensed while the upper kneading drum 11 makes the next revolution (S5). Then, the rotation rate sensed while the upper kneading drum 11 makes the next revolution is compared with the rotation rate stored in the memory 71 to determine whether a difference between the two rotation rates exceeds the allowable limit (S7). When the difference exceeds the allowable limit, it is determined that the upper kneading drum 11 is operating in an abnormal state in which, for example, the mixing bag is incorrectly attached to the upper and lower kneading drums 11 and 13, and the motor 26 is stopped (S9). Finally, the control panel 5 warns a user of the abnormal state (S11).

In the foregoing embodiment, the first and second disks 36 and 37 are formed with the projections 44 and 48, respectively, to sense the rotations of the upper and lower kneading drums 11 and 13. However, the first and second disks 36 and 37 may be formed with a plurality of holes at regular intervals to sense the rotation of the upper and lower kneading drums 11 and 13.

According to this embodiment of the present invention, while the mixing bag 7 is reciprocated up and down to knead the dough, the internal components of the bread maker are prevented from damage caused by, for example, the upper and lower kneading drums rotating asynchronously, or the mixing bag separating from the upper or lower kneading drum because the mixing bag 7 tears, is incorrectly attached to the upper and lower kneading drums, etc.

As described above, this embodiment of the present invention provides a bread maker and a control method thereof capable of preventing internal components of the bread maker from becoming damaged due to, for example, asynchronous rotation of the upper and lower kneading drums, an incorrect installation of a mixing bag, etc.

## Claims

1. A bread maker, comprising:
a main body (1) divided into an oven compartment (10) and an electric component compartment (20);
a pair of parallel kneading drums (11, 13) spaced apart from each other inside the oven compartment (10), to which are attachable opposite ends of a mixing bag (7) containing ingredients, the kneading drums (11, 13) reversing rotary direction periodically;
a drum driving part (25) in the electric component compartment (20) rotating the kneading drums (11, 13) in clockwise and counterclockwise directions;
a rotation sensing part (40) sensing a rotation rate of one of the kneading drums (11, 13);
**characterised by**
a controller (70) storing the rotation rate sensed by the rotation sensing part (40) while the one of the kneading drums (11, 13) rotates during a first predetermined period of time, comparing the stored rotation rate with a rotation rate sensed by the rotation sensing part (40) while the one of the kneading drums (11, 13) rotates during a next predetermined period of time, and stopping the drum driving part (25) when a difference between the stored rotation rate and the sensed rotation rate for the next period of time exceeds an allowable limit.

2. The bread maker according to claim 1, wherein the rotation sensing part (40) comprises:
a disk part (41) rotating with the one of the kneading drums (11, 13), and having at least one projection (44, 48) radially extending from a circumference thereof; and
a disk sensor (61) emitting a light toward the disk part (41) and outputting a pulse signal according to interruption of the light by rotation of the at least one projection (44, 48) of the disk part (41).

3. The bread maker according to claim 2, wherein the disk part (41) comprises:
a first disk (36) having a single projection (44) ; and
a second disk (37) having a plurality of projections (40) along a circumference thereof at regular intervals.

4. The bread maker according to claim 2 or claim 3, wherein the disk sensor (61) comprises a light emitting part (63a, 65a) and a light receiving part (63b, 65b) facing each other with the disk part (41) therebetween, the disk sensor (61) outputting a pulse signal when the at least one projection (44, 48) of the disk part (41) interrupts light emitted from the light emitting part (63a, 65a) to the light receiving part (63b, 65b).

5. The bread maker according to claim 4, wherein the controller (70) includes a memory (71) storing the pulse signal output during the first period of time, and the controller (70) compares a difference in pulse widths between the pulse signal stored in the memory (71) and the pulse signal output from the pulse generator during the next period of time.

6. The bread maker according to any one of claims 2-5, wherein the disk part (41) is attached to a rotation shaft (28) of the one of the kneading drums (11, 13).

7. The bread maker according to any one of claims 3-6, wherein the disk sensor (61) senses one revolution of the one of the kneading drums (11, 13) using the first disk (36), and the disk sensor (61) senses rotation of the one of the kneading drums (11, 13) that is less than one revolution using the second disk (37).

8. The bread maker according to any one of claims 3-7, wherein the disk sensor (61) outputs one pulse signal per revolution of the one of the kneading drums (11, 13), and outputs a number of pulse signals per revolution of the one of the kneading drums (11, 13) equal to the number of projections on the second disk (37).

9. The bread maker according to any one of claims 3-8, wherein the kneading drums (11, 13) comprise an upper kneading drum (11) and a lower kneading drum (13).

10. The bread maker according to claim 9, wherein the drum driving part (25) comprises a motor (26) to rotate the lower kneading drum (13) and a belt (27) connecting the lower kneading drum (13) to the upper kneading drum (11), the belt (27) transmitting a rotary movement of the lower kneading drum (13) to the upper kneading drum (11).

11. The bread maker according to claim 10, wherein the controller (70) determines a rotation rate of the upper kneading drum (11) using the output pulse signals and controls the motor (26) to rotate the upper kneading drum (11) and the lower kneading drum (13) according to the determined rotation rate.

12. The bread maker according to claim 10, wherein when the pulse width of the pulse signals is greater than the predetermined pulse width, the controller (70) determines a state of the bread maker to be abnormal and that the motor (26) is overloaded, with the first disk (36) and the second disk (37) rotating slower than rotation thereof in a normal state.

13. A method of controlling a bread maker having an oven compartment (10) and an electric component (20) compartment, a pair of parallel kneading drums (11, 13) inside the oven compartment (10) to which are attachable opposite ends of a mixing bag (7) containing ingredients, the kneading drums (11, 13) reversing rotary direction periodically, and a drum driving part (25) in the electric component compartment (20) rotating the kneading drums (11, 13) clockwise and counterclockwise, the method being **characterised by:**
sensing a rotation rate of one of the kneading drums (11, 13) for a first predetermined period of time;
storing the sensed rotation rate;
comparing the stored rotation rate with the rotation rate sensed while the one of the kneading drums (11, 13) rotates during a next period of time; and
stopping the drum driving part (25) when a difference between the stored rotation rate and the rotation rate sensed during the next period of time exceeds an allowable limit.

14. The method according to claim 13, wherein the bread maker includes a rotation sensing part (40) having a disk part (41, 37) rotating with the one of the kneading drums (11, 13), the disk part (41, 37) having a plurality of projections (48) around a circumference thereof at regular intervals, and a disk sensor (61) outputting a pulse signal as the projections of the disk part (41, 37) interrupt light emitted toward the disk part (41, 37), wherein
storing of the sensed rotation rate is based upon the pulse width of the pulse signal output from the disk sensor (61) while the one of the kneading drums (11, 13) rotates for the first predetermined period of time.

15. The method according to claim 14, wherein the comparing of the stored rotation rate and the sensed rotation rate of the next period of time includes comparing pulse widths of the pulse signals output during the first period of time and the next period of time, respectively.

16. The method according to any one of claims 13-15, further comprising providing a warning when a difference between the stored rotation rate and the sensed rotation rate of the next period of time exceeds an allowable limit.

## Patentansprüche

1. Brotbackmaschine, die umfasst:
ein Hauptgehäuse (1), das in eine Ofenkammer (2) und in eine Kammer für elektrische Bauteile (20) unterteilt ist;
ein Paar paralleler Knetwalzen (11, 13), die voneinander im Inneren der Ofenkammer (10) beabstandet sind und an denen einander gegenüberliegende Enden eines Mischbeutels (10) angebracht werden können, der Zutaten enthält, wobei die Knetwalzen (11, 13) ihre Drehrichtung periodisch umkehren;
einen Walzenantriebsteil (25) in der Kammer (20) für elektrische Bautelle, der die Knetwalzen (11, 13) im Uhrzeigersinn und entgegen dem Uhrzeigersinn dreht;
einen Drehungserfassungsteil (40), der einen Drehungsgrad einer der Knetwalzen (11, 13) erfasst;
**gekennzeichnet durch** eine Steuerung (70), die die **durch** den Drehungserfassungsteil (40) erfassten Drehungsgrad speichert, während sich eine der Knetwalzen (11, 13) während eines vorgegebenen Zeitraums dreht, den gespeicherten Drehungsgrad mit einem **durch** den Drehungserfassungsteil (40) erfassten Drehungsgrad vergleicht, während sich die eine der Knetwalzen (11, 13) während eines nächsten vorgegebenen Zeitraums dreht, und den Walzenantriebsteil (25) anhält, wenn eine Differenz zwischen dem gespeicherten Drehungsgrad und dem erfassten Drehungsgrad für den nächsten Zeitraum eine zulassige Grenze übersteigt.

2. Brotbackmaschine nach Anspruch 1, wobei der Dreherfassungsteil (40) umfasst:
einen Scheibenteil (41), der sich mit einer der Knetwalzen (11, 13) dreht und wenigstens einen Vorsprung (44, 48) hat, der sich radial von einem Umfang desselben erstreckt; und
einen Scheibensensor (61), der ein Licht auf den Scheibenteil (41) zu emittiert und entsprechend einer Unterbrechung des Lichts durch Drehung des wenigstens einen Vorsprungs (44, 48) des Scheibenteils (41) ein Impulssignal ausgibt.

3. Brotbackmaschine nach Anspruch 2, wobei der Scheibenteil (41) umfasst:
eine erste Scheibe (36), die einen einzelnen Vorsprung (44) hat; und
eine zweite Scheibe (37), die eine Vielzahl von Vorsprüngen (40) in regelmäßigen Abständen entlang eines Umfangs derselben hat.

4. Brotbackmaschine nach Anspruch 2 oder 3, wobei der Scheibensensor (61) einen Licht emittierenden Teil (63a, 65a) und einen Licht empfangenden Teil (63b, 65b) umfasst, die einander zugewandt sind, wobei sich der Scheibenteil (41) zwischen ihnen befindet und der Scheibensensor (61) ein Impulssignal ausgibt, wenn der wenigstens eine Vorsprung (44, 48) des Scheibentelis (41) Licht unterbricht, das von dem Licht emittierenden Teil (63a, 65a) zu dem Licht empfangenden Teil (63b, 65b) emittiert wird.

5. Brotbackmaschine nach Anspruch 4, wobei die Steuerung (70) einen Speicher (71) enthält, der das Impulssignal speichert, das während des ersten Zeitraums ausgegeben wird, und die Steuerung (70) eine Differenz der Impulsbreiten zwischen dem Impulssignal, das in dem Speicher (71) gespeichert ist und dem Impulssignal vergleicht, das von dem Impulsgenerator während des nächsten Zeitraums ausgegeben wird.

6. Brotbackmaschine nach einem der Ansprüche 2-5, wobei der Scheibenteil (41) an einer Drehwelle (28) der einen der Knetwalzen (11, 13) angebracht ist.

7. Brotbackmaschine nach einem der Ansprüche 3-6, wobei der Scheibensensor (61) eine Umdrehung der einen der Knetwalzen (11, 13) unter Verwendung der ersten Scheibe (36) erfasst, und der Scheibensensor (61) Drehung der einen der Knetwalzen (11, 13), die geringer als eine Umdrehung ist, unter Verwendung der zweiten Scheibe (37) erfasst.

8. Brotbackmaschine nach einem der Ansprüche 3-7, wobei der Scheibensensor (61) ein Imputssignal pro Umdrehung der einen der Knetwalzen (11, 13) ausgibt und eine Anzahl von Impulssignalen pro Umdrehung der einen der Knetwalzen (11, 13) ausgibt, die der Anzahl von Vorsprüngen an der zweiten Scheibe (37) gleich ist.

9. Brotbackmaschine nach einem der Ansprüche 3-8, wobei die Knetwalzen (11, 13) eine obere Knetwalze (11) und eine untere Knetwalze (13) umfassen.

10. Brotbackmaschine nach Anspruch 9, wobei der Trommelantriebsteil (35) einen Motor (26), der die untere Knetwalze (13) dreht, sowie einen Riemen (27) umfasst, der die untere Knetwalze (13) mit der oberen Knetwaize (11) verbindet, wobei der Riemen (27) eine Drehbewegung der unteren Knetwalze (13) zu der oberen Knetwalze (11) überträgt.

11. Brotbackmaschine nach Anspruch 10, wobei die Steuerung (70) einen Drehungsgrad der oberen Knetwalze (11) unter Verwendung der ausgegebenen Impulssignale bestimmt und den Motor (26) entsprechend dem bestimmten Drehungsgrad zum Drehen der oberen Knetwalze (11) und der unteren Knetwalze (13) steuert.

12. Brotbackmaschine nach Anspruch 10, wobei, wenn die Impulsbreite der Impulssignale größer ist als die vorgegebene Impulsbreite, die Steuerung (70) bestimmt, dass ein Zustand der Brotbackmaschine abnormal ist und der Motor (26) überlastet ist, wenn sich die erste Scheibe (36) und die zweite Scheibe (37) langsamer als bei einer Drehung derselben in einem normalen Zustand drehen.

13. Verfahren zum Steuern einer Brotbackmaschine mit einer Ofenkammer (10) und einer Kammer (20) für elektrische Bauteile, einem Paar paralleler Knetwalzen (11, 13) im Inneren der Ofenkammer (10), an denen einander geganüberliegende Enden eines Mischbeutels (11), angebracht werden können, der Zutaten enthält, wobei die Knetwalzen (11, 13) die Drehrichtung periodisch umkehren, und einem Walzen-Antriebsteil (25) in der Kammer (20) für elektrische Bauteile, der die Knetwalzen (11, 13) im Uhrzeigersinn und entgegen dem Uhrzeigersinn dreht, wobei das Verfahren **gekennzeichnet ist durch:**
Erfassen eines Drehungsgrades einer der Knetwalzen (11, 13) für einen ersten vorgegebenen Zeitraums;
Speichern des erfassten Drehungsgrades;
Vergleichen des gespeicherten Drehungsgrades mit dem Drehungsgrad, der erfasst wird, während sich die eine der Knetwalzen (11, 13) während eines nächsten Zeitraums dreht; und
Anhalten des Walzen-Antriebsteils (25), wenn eine Differenz zwischen dem gespeicherten Drehungsgrad und dem Drehungsgrad, der während des nächsten Zeitraums erfasst wird, eine zulässige Grenze übersteigt.

14. Verfahren nach Anspruch 13, wobei die Brotbackmaschine einen Drehungserfassungsteil (40) mit einem Scheibenteil (41, 37), der sich mit einer der Knetwalzen (11, 13) dreht, wobei der Scheibenteil (41, 37) eine Vielzahl von Vorsprüngen (48) um einen Umfang desselben herum in regelmäßigen Abständen hat, und einen Scheibensensor (61) enthält, der ein Impulssignal ausgibt, wenn die Vorsprünge des Scheibenteils (41, 37) Licht unterbrechen, das auf den Scheibenteil (41, 37) zu emittiert wird, wobei:
das Speichern des erfassten Drehungsgrades auf der Impulsbreite des Impulssignals basiert, das von dem Scheibensensor (61) ausgegeben wird wenn sich die eine der Knetwalzen (11, 13) über den ersten vorgegebenen Zeitraum dreht.

15. Verfahren nach Anspruch 14, wobei das Vergleichen des gespeicherten Drehungsgrades und des erfassten Drehungsgrades des nächsten Zeitraums das Vergleichen von Impulsbreiten der Impulssignale einschließt, die während des ersten Zeitraums bzw. während des nächsten Zeitraums ausgegeben werden.

16. Verfahren nach einem der Ansprüche 13-15, das des Weiteren das Erzeugen einer Warnmeldung umfasst, wenn eine Differenz zwischen dem gespeicherten Drehungsgrad und dem erfassten Drehungsgrad des nächsten Zeitraums eine zulässige Grenze übersteigt.

## Revendications

1. Dispositif de fabrication de pain, comprenant:
un corps principal (1) divisé en un compartiment de four (10) et un compartiment de composant électrique (20) ;
une paire de tambours de malaxage parallèles (11, 13) espacés l'un par rapport à l'autre à l'intérieur du compartiment de four (10), sur lesquels peuvent être fixées des extrémités opposées d'une poche de mélange (7) contenant des ingrédients, le sens de rotation des tambours de malaxage (11, 13) étant inversé de manière périodique ;
une partie d'entraînement de tambour (25) dans le compartiment de composant électrique (20) entraînant en rotation les tambours de malaxage (11, 13) dans le sens des aiguilles d'une montre et en sens inverse des aiguilles d'une montre ;
une partie de détection de rotation (40) détectant une vitesse de rotation de l'un des tambours de malaxage (11, 13) ;
**caractérisé par** une unité de commande (70) mémorisant la vitesse de rotation détectée par la partie de détection de rotation (40) lorsque le premier des tambours de malaxage (11, 13) tourne au cours d'une première période de temps prédéterminée, comparant la vitesse de rotation mémorisée avec une vitesse de rotation détectée par la partie de détection de rotation (40) alors que le premier des tambours de malaxage (11, 13) tourne au cours d'une période de temps prédéterminée suivante, et arrètant la partie d'entraînement de tambour (25) lorsqu'une différence entre la vitesse de rotation mémorisée et la vitesse de rotation détectée pour la période de temps suivante excède une limite autorisée.

2. Dispositif de fabrication de pain selon la revendication 1, dans lequel la partie de détection de rotation (40) comprend:
une partie formant disque (41) tournant avec le premier des tambours de malaxage (11, 13), et comportant au moins une saillie (44, 48) s'étendant radialement à partir de sa circonférence ; et
un détecteur de disque (61) émettant de la lumière vers la partie formant disque (41) et délivrant un signal impulsionnel en fonction de l'interruption de la lumière par la rotation de la au moins une saillie (44, 48) de la partie formant disque (41).

3. Dispositif de fabrication de pain selon la revendication 2, dans lequel la partie formant disque (41) comprend:
un premier disque (36) comportant une saillie unique (44) ; et
un second disque (37) comportant une pluralité de saillies (40) à intervalles réguliers le long de sa circonférence.

4. Dispositif de fabrication de pain selon la revendication 2 ou la revendication 3, dans lequel le détecteur de disque (61) comprend une partie émettrice de lumière (63a, 65a) et une partie réceptrice de lumière (63b, 65b) l'une face à l'autre, la partie formant disque (41) étant entre les deux, le détecteur de disque (61) délivrant un signal impulsionnel lorsque la au moins une saillie (44, 48) de la partie fonnant disque (41) interrompt la lumière émise à partir de la partie émettrice de lumière (63a, 65a) vers la partie réceptrice de lumière (63b, 65b).

5. Dispositif de fabrication de pain selon la revendication 4, dans lequel l'unité de commande (70) comporte une mémoire (71) mémorisant le signal impulsionnel délivré au cours de la première période de temps, et l'unité de commande (70) compare une différence sur les largeurs d'impulsion entre le signal impulsionnel mémorisé dans la mémoire (71) et la sortie de signal impulsionnel à partir du générateur d'impulsion au cours de la période de temps suivante.

6. Dispositif de fabrication de pain selon l'une quelconque des revendications 2 à 5, dans lequel la partie fonnant disque (41) est fixée sur un arbre de rotation (28) du premier des tambours de malaxage (11, 13).

7. Dispositif de fabrication de pain selon l'une quelconque des revendications 3 à 6, dans lequel le détecteur de disque (61) détecte une révolution du premier des tambours de malaxage (11, 13) en utilisant le premier disque (36), et le détecteur de disque (61) détecte la rotation du premier des tambours de malaxage (11, 13) qui est inférieure à une révolution en utilisant le second disque (37).

8. Dispositif de fabrication de pain selon l'une quelconque des revendications 3 à 7, dans lequel le détecteur de disque (61) délivre un signal impulsionnel par révolution du premier des tambours de malaxage (11, 13), et délivre un nombre de signaux impulsionnels par révolution du premier des tambours de malaxage (11, 13) égal au nombre des saillies sur le second disque (37).

9. Dispositif de fabrication de pain selon l'une quelconque des revendications 3 à 8, dans lequel les tambours de malaxage (11, 13) comprennent un tambour de malaxage supérieur (11) et un tambour de malaxage inférieur (13).

10. Dispositif de fabrication de pain selon la revendication 9, dans lequel la partie d'entraînement de tambour (25) comprend un moteur (26) destiné à faire tourner le tambour de malaxage inférieur (13) et une courroie (27) reliant le tambour de malaxage inférieur (13) au tambour de malaxage supérieur (11), la courroie (27) transmettant un mouvement de rotation du tambour de malaxage inférieur (13) au tambour de malaxage supérieur (11).

11. Dispositif de fabrication de pain selon la revendication 10, dans lequel l'unité de commande (70) détermine une vitesse de rotation du tambour de malaxage supérieur (11) en utilisant les signaux impulsionnels de sortie et commande le moteur (26) de manière à faire tourner le tambour de malaxage supérieur (11) et le tambour de malaxage inférieur (13) en fonction de la vitesse de rotation déterminée.

12. Dispositif de fabrication de pain selon la revendication 10, dans lequel lorsque la largeur d'impulsion des signaux impulsionnels est supérieure à la largeur d'impulsion prédéterminée, l'unité de commande (70) détermine qu'un état du dispositif de fabrication de pain est anormal et que le moteur (26) est en surcharge, le premier disque (36) et le second disque (37) tournant plus lentement que leur vitesse de rotation dans un état normal.

13. Procédé de commande d'un dispositif de fabrication de pain comportant un compartiment de four (10) et un compartiment de composant électrique (20), une paire de tambours de malaxage parallèles (11, 13) à l'intérieur du compartiment de four (10) sur lesquels peuvent être fixées les extrémités opposées d'une poche de mélange (7) contenant des ingrédients, le sens de rotation des tambours de malaxage (11, 13) étant inversé de manière périodique, et une partie d'entraînement de tambour (25) dans le compartiment de composant électrique (20) entraînant en rotation les tambours de malaxage (11, 13) dans le sens des aiguilles d'une montre et en sens inverse, le procédé étant **caractérisé par**:
la détection d'une vitesse de rotation d'un premier des tambours de malaxage (11, 13) pendant une première période de temps prédéterminée ;
la mémorisation de la vitesse de rotation détectée ;
la comparaison de la vitesse de rotation mémorisée avec la vitesse de rotation détectée pendant que le premier des tambours de malaxage (11, 13) tourne au cours d'une période de temps suivante ; et
l'arrêt de la partie d'entraînement de tambour (25) lorsqu'une différence entre la vitesse de rotation mémorisée et la vitesse de rotation détectée au cours de la période de temps suivante excède une limite autorisée.

14. Procédé selon la revendication 13, dans lequel le dispositif de fabrication de pain comprend une partie de détection de rotation (40) comportant une partie formant disque (41, 37) tournant avec le premier des tambours de malaxage (11, 13), la partie formant disque (41, 37) comportant une pluralité de saillies (48) à intervalles réguliers autour de sa circonférence et un détecteur de disque (61) délivrant un signal impulsionnel lorsque les saillies de la partie formant disque (41, 37) interrompent la lumière émise vers la partie formant disque (41, 37), dans lequel
la mémorisation de la vitesse de rotation détectée est basée sur la largeur d'impulsion du signal impulsionnel délivré à partir du détecteur de disque (61) lorsque le premier des tambours de malaxage (11, 13) tourne pendant la première période de temps prédéterminée.

15. Procédé selon la revendication 14, dans lequel la comparaison de la vitesse de rotation mémorisée et de la vitesse de rotation détectée de la période de temps suivante comporte la comparaison des largeurs d'impulsion des signaux impulsionnels délivrés respectivement au cours de la première période de temps et de la période de temps suivante.

16. Procédé selon l'une quelconque des revendications 13 à 15, comprenant, en outre, la fourniture d'un avertissement lorsqu'une différence entre la vitesse de rotation mémorisée et la vitesse de rotation détectée de la période de temps suivante excède une limite autorisée.
